# EUROPEAN PATENT SPECIFICATION

(11) **EP 3 949 511 B1**
(45) Date of publication and mention of the grant of the patent: **08.05.2024**
(21) Application number: 20798413.9
(22) Date of filing: 29.04.2020
(51) Int. Cl.: H04W 36/00, H04W 36/36, H04W 76/19, H04W 76/27

(54) **METHOD AND APPARATUS FOR PERFORMING RADIO LINK FAILURE REPORTING IN NEXT-GENERATION MOBILE COMMUNICATION SYSTEM**
VERFAHREN UND VORRICHTUNG ZUR DURCHFÜHRUNG DER MELDUNG VON FUNKVERBINDUNGSAUSFÄLLEN IN EINEM MOBILKOMMUNIKATIONSSYSTEM DER NÄCHSTEN GENERATION
PROCÉDÉ ET APPAREIL PERMETTANT D'ÉTABLIR UN RAPPORT DE DÉFAILLANCE DE LIAISON RADIO DANS UN SYSTÈME DE COMMUNICATION MOBILE DE NOUVELLE GÉNÉRATION

(30) Priority: 02.05.2019 KR 20190051443
(43) Date of publication of application: 09.02.2022
(73) Proprietor: Samsung Electronics Co., Ltd., Suwon-si, Gyeonggi-do 16677 (KR)
(72) Inventor: KIM, Sangbum, Suwon-si, Gyeonggi-do 16677 (KR); KIM, Soenghun, Suwon-si, Gyeonggi-do 16677 (KR)
(74) Representative: Nederlandsch Octrooibureau
(86) International application number: PCT/KR2020/005782
(87) International publication number: WO 2020/222572

(56) References cited:
- WO-A1-2012/019362
- US-A1- 2014 335 855
- US-A1- 2015 195 753
- HUAWEI ET AL: "Impact on MRO from RRC re-establishment", 3GPP DRAFT; R3-131285 RRCREESTOUTCOME, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Barcelona, Spain; 20130819 - 20130823 9 August 2013 (2013-08-09), XP050719447, Retrieved from the Internet: URL:http://www.3gpp.org/ftp/tsg_ran/WG3_Iu /TSGR3_81/Docs/ [retrieved on 2013-08-09]
- QUALCOMM INCORPORATED: "LTE Conditional HO design considerations", 3GPP DRAFT; R2-1904662_LTE CONDITIONAL HANDOVER DESIGN CONSIDERATIONS_V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Xian, China; 20190408 - 20190412 6 April 2019 (2019-04-06), XP051701948, Retrieved from the Internet: URL:http://www.3gpp.org/ftp/Meetings%5F3GP P%5FSYNC/RAN2/Docs/R2%2D1904662%2Ezip [retrieved on 2019-04-06]
- NEC: "Remaining issues in S-RLF", 3GPP DRAFT; R2-142411_REMAINING ISSUES IN S-RLF, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Seoul, South Korea; 20140519 - 20140523 18 May 2014 (2014-05-18), XP050793561, Retrieved from the Internet: URL:http://www.3gpp.org/ftp/Meetings_3GPP_ SYNC/RAN2/Docs/ [retrieved on 2014-05-18]
- Qualcomm Incorporated: "LTE Conditional HO design considerations", 3GPP Draft; R2-1904662_LTE Conditional Handover design considerations_v3, 3rd Generation Partnership Project (3GPP), Mobile Competence Centre ; 650, route des Lucioles ; F-06921 Sophia-Antipolis Cedex ; France, 29 March 2019 (2019-03-29), XP051693860,
- Ericsson: "Reporting RLM related issues upon handover and access to the target cell", 3GPP Draft; R3-191869-Reporting RLM related issues upon handover and access to the target cell, 3rd Generation Partnership Project (3GPP), Mobile Competence Centre ; 650, route des Lucioles ; F-06921 Sophia-Antipolis Cedex ; France, 30 March 2019 (2019-03-30), XP051695319,
- OPPO: "Discussion on failure handling of handover for LTE mobility", 3GPP Draft; R2-1905633 - Discussion on failure handling of handover for LTE mobility, 3rd Generation Partnership Project (3GPP), Mobile Competence Centre ; 650, route des Lucioles ; F-06921 Sophia-Antipolis Cedex ; France, 30 April 2019 (2019-04-30), XP051709991,
- Anonymous: "3rd Generation Partnership Project; Technical Specification Group Radio Access Network; Evolved Universal Terrestrial Radio Access (E-UTRA); Radio Resource Control (RRC); Protocol specification (Release 15)", 3GPP Standard; Technical Specification; 3GPP TS 36.331, 3rd Generation Partnership Project (3GPP), Mobile Competence Centre ; 650, route des Lucioles ; F-06921 Sophia-Antipolis Cedex ; France, 30 April 2019 (2019-04-30), pages 1-948, XP051723678,

## Description

### [Technical Field]

The disclosure relates to the operation of a terminal and a base station in a next-generation mobile communication system, and more particularly to a method and apparatus for performing radio link failure reporting in a next-generation mobile communication system.

### [Background Art]

To meet the demand for wireless data traffic having increased since deployment of 4G communication systems, efforts have been made to develop an improved 5G or pre-5G communication system. Therefore, the 5G or pre-5G communication system is also called a "Beyond 4G Network" or a "Post LTE System". The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), full dimensional MIMO (FD-MIMO), array antenna, an analog beam forming, large scale antenna techniques are discussed in 5G communication systems. In addition, in 5G communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like. In the 5G system, hybrid FSK and QAM modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, machine type communication (MTC), and machine-to-machine (M2M) communication may be implemented by beamforming, MIMO, and array antennas. Application of a cloud radio access network (RAN) as the above-described big data processing technology may also be considered an example of convergence of the 5G technology with the IoT technology.

The above information is presented as background information only to assist with an understanding of the disclosure. No determination has been made, and no assertion is made, as to whether any of the above might be applicable as prior art with regard to the disclosure.
US 2015/195753 A1 discloses to provide a signaling method carried out by user equipment (UE) in a wireless communication system. The method comprises: starting a prohibit timer regarding the transmission of a first UE-originated indicator; and restarting the prohibit timer when a handover indication message is received from a network.
HUAWEI ET AT: "Impact on MRO from RRC re-establishment", 3GPP DRAFT; R3-131285 RRCREESTOUTCOME, 3RD GENERATION PARTNERSHIP PROJECT (3GPP), MOBILE COMPETENCE CENTRE; 650 ROUTE DES LUCIOLES; F-06921 SOPHIA-ANTIPOLIS CEDEX; FRANCE, RAN WG3, Barcelona, Spain; 20130819-20130823 9 August 2013 discloses the problem and different solutions related to the impact of the outcome of the RRC re-establishment on MRO.
QUALCOMM INCORPORATED: "LTE Conditional HO design considerations", 3GPP DRAFT; R2-1904662 LTE CONDITIONAL HANDOVER DESIGN CONSIDERATIONS V3, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, RAN WG2, Xian, China; 20190408 - 20190412 6 April 2019 discloses about LTE Conditional handover design considerations, especially the details on CHO preparation, execution and completion procedures.

### [Disclosure of Invention]

### [Technical Problem]

A technical problem to be solved in an embodiment is to provide a method and apparatus for performing radio link failure reporting in a next-generation mobile communication system.

In addition, a technical problem to be solved in an embodiment is to provide a method and apparatus for supporting a plurality of pieces of DRX configuration information in a next-generation mobile communication system.

In addition, a technical problem to be solved in an embodiment relates to a method and apparatus for improving radio link failure reporting in a next-generation mobile communication system.

### [Solution to Problem]

The invention is defined in the claims.

### [Advantageous Effects of Invention]

An apparatus and a method according to various embodiments provide a method for performing radio link failure reporting in a next-generation mobile communication system, a method for supporting a plurality of pieces of DRX configuration information in the next-generation mobile communication system, and a method for improving wireless link failure reporting in the next-generation mobile communication system.

Effects obtainable from the disclosure may not be limited to the above mentioned effects, and other effects which are not mentioned may be clearly understood, through the following descriptions, by those skilled in the art to which the disclosure pertains.

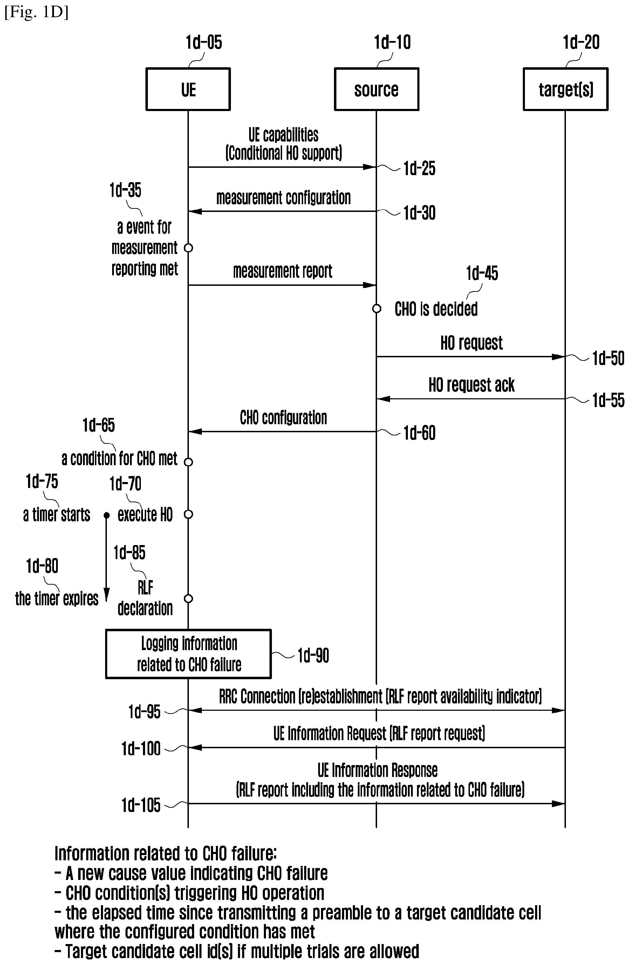

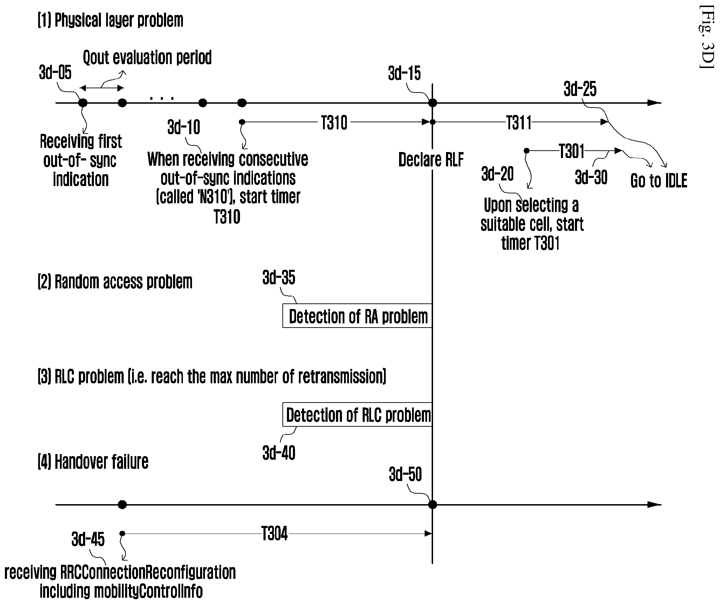

In the following description, the invention is described with particular reference to figures 1D and 3D, while the description of the remaining figures is provided for illustrative purposes for a better understanding of the invention.

### [Brief Description of Drawings]

For a more complete understanding of the present disclosure and its advantages, reference is now made to the following description taken in conjunction with the accompanying drawings, in which like reference numerals represent like parts:
FIG. 1A illustrates the structure of an LTE system to which the disclosure is applied;
FIG. 1B illustrates a radio protocol structure in an LTE system to which the disclosure is applied;
FIG. 1C illustrates a flowchart of a process of performing a first handover operation in a mobile communication system;
FIG. 1D illustrates a flowchart of a process of performing a second handover operation in a mobile communication system;
FIG. 1E illustrates a flowchart of a UE operation in the disclosure;
FIG. 1F illustrates a block diagram showing the internal structure of a UE to which the disclosure is applied;
FIG. 1G illustrates a block diagram showing the configuration of a base station according to the disclosure;
FIG. 2A illustrates the structure of a next-generation mobile communication system;
FIG. 2B illustrates DRX operation in existing LTE technology;
FIG. 2C illustrates a flowchart of a method for providing preferred DRX configuration information by a UE in the disclosure;
FIG. 2D illustrates a flowchart of a UE operation in the disclosure;
FIG. 2E illustrates a flowchart of a base station operation in the disclosure;
FIG. 3A illustrates the structure of an LTE system to which the disclosure is applied;
FIG. 3B illustrates a radio protocol structure in an LTE system to which the disclosure is applied;
FIG. 3C illustrates a radio-link-monitoring (RLM) operation in the disclosure;
FIG. 3D illustrates a radio link failure (RLF) operation in the disclosure;
FIG. 3E illustrates a process of collecting useful information after RLF in the disclosure;
FIG. 3F illustrates a flowchart of a process of collecting useful information after RLF in the disclosure; and
FIG. 3G illustrates a flowchart of a UE operation for collecting useful information after RLF in the disclosure.

### [Mode for the Invention]

Before undertaking the detailed description below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

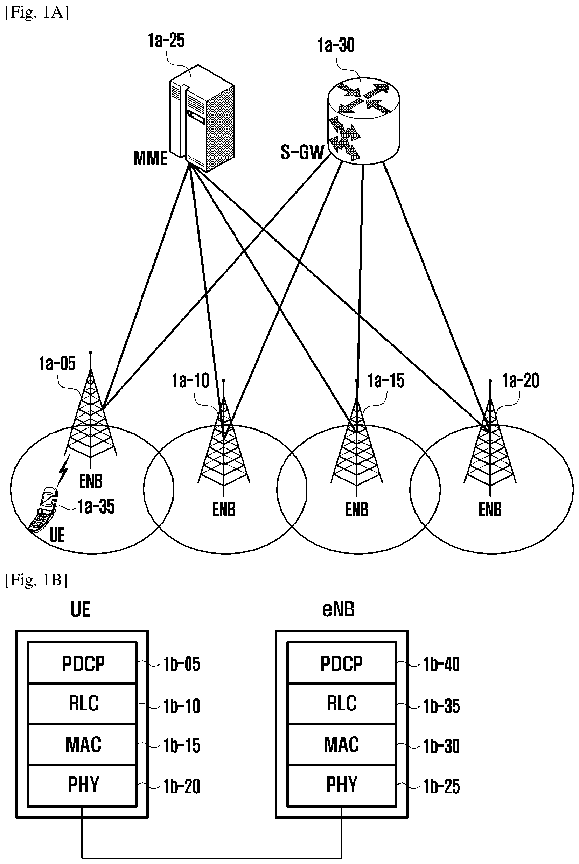

FIGS. 1A through 3G, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

In the following description of the disclosure, a detailed description of known functions or configurations incorporated herein will be omitted when it may make the subject matter of the disclosure unnecessarily unclear. Hereinafter, embodiments of the disclosure will be described with reference to the accompanying drawings.

The disclosure is prepared based on an LTE system, but is applied to other mobile communication systems such as NR, which is a next-generation mobile communication system. For example, in the disclosure, an eNB in LTE corresponds to a gNB in NR, and an MME in LTE corresponds to an AMF in NR.

FIG. 1A illustrates the structure of an LTE system to which the disclosure is applied.

Referring to FIG. 1a, a radio access network of the LTE system includes next-generation base stations (also referred to as evolved node Bs, hereinafter referred to as ENBs, Node Bs or base stations) 1a-05, 1a-10, 1a-15, and 1a-20, a mobility management entity (MME) 1a-25, and a serving gateway (S-GW) 1a-30. A user equipment (hereinafter referred to as UE or terminal) 1a-35 accesses an external network through the ENBs 1a-05, 1a-10, 1a-15, and 1a-20 and the S-GW 1a-30.

In FIG. 1A, the ENBs 1a-05, 1a-10, 1a-15, and 1a-20 correspond to existing Node B of a UMTS system. The ENBs are connected to the UE 1a-35 via a radio channel and performs a more complicated role than that of an existing Node B. In the LTE system, since all user traffic, including real-time services such as voice over IP (VoIP) carried over the Internet protocol, are serviced through a shared channel, a device for collecting and scheduling state information such as buffer states, an available transmission power state, and channel status of UEs is required. The ENBs 1a-05, 1a-10, 1a-15, and 1a-20 are used to perform such a function of the device. In general, one ENB controls multiple cells. For example, in order to implement a transmission rate of 100 Mbps, the LTE system uses orthogonal frequency division multiplexing (OFDM) as a radio access technology in a bandwidth of 20 MHz, for example. In addition, the LTE system adopts an adaptive modulation & coding (hereinafter referred to as AMC) scheme for determining a modulation scheme and a channel coding rate according to the state of a channel used by a terminal. The S-GW 1a-30 is a device for providing a data bearer and generating or removing a data bearer under the control of the MME 1a-25. The MME is a device that is used to perform various control functions in addition to mobility management functions for terminals, and is connected to multiple base stations.

FIG. 1B illustrates a radio protocol structure in an LTE system to which the disclosure is applied.

Referring to FIG. 1B, the radio protocol of the LTE system includes packet data convergence protocols (PDCPs) 1b-05 and 1b-40, radio link controls (RLCs) 1b-10 and 1b-35, and medium access controls (MACs) 1b-15 and 1b-30, in a UE and an eNB, respectively. The packet data convergence protocols (PDCPs) 1b-05 and 1b-40 are used to perform an operation, such as IP header compression/restoration. The MACs 1b-15 and 1b-30 are connected to multiple RLC layer devices configured in one terminal, and may perform an operation of multiplexing RLC PDUs with an MAC PDU and de-multiplexing the RLC PDUs from the MAC PDU. Physical layers 1b-20 and 1b-25 may perform an operation of channel coding and modulating higher layer data, generating the higher layer data into an OFDM symbol, transmitting the OFDM symbol through a radio channel, or demodulating an OFDM symbol received through a radio channel, channel-decoding the OFDM symbol, and transmitting the OFDM symbol to a higher layer.

The disclosure proposes the collection of useful information if condition-based handover fails and thus an RLF occurs in a mobile communication system such as LTE or NR. In the disclosure, a first handover operation refers to an operation in which, if a terminal receives configuration information indicating to perform handover from a base station, the terminal immediately perform a handover operation. On the other hand, a second handover operation refers to an operation in which, if a terminal receives configuration information indicating to perform handover from the base station, the terminal does not perform the handover operation immediately, but performs the handover operation if the specific condition is satisfied. Due to the above feature, the second handover operation is referred to as condition-based handover or conditional handover (CHO). Since the terminal may most rapidly identify a change in the state of channel quality, the feature whereby the terminal determines the time point at which a handover operation is initiated is advantageous in minimizing the probability of handover failure. Therefore, the second handover is considered a more advanced technology than the first handover. Only one target cell may be considered in the first handover while one or more target cells may be considered in the second handover. The network determines the number of target cells considered in the second handover. In order to minimize the complexity of neighboring target cells, only one target cell may be considered in the second handover. The second handover (condition-based handover) may also fail, in which RLF is declared (or detected). At this time, useful information may be collected and then reported in the case where the mode of the terminal is switched to a connected mode, and this is called an RLF report. The disclosure proposes collection of useful information at the time of occurrence of RLF due to a second handover failure.

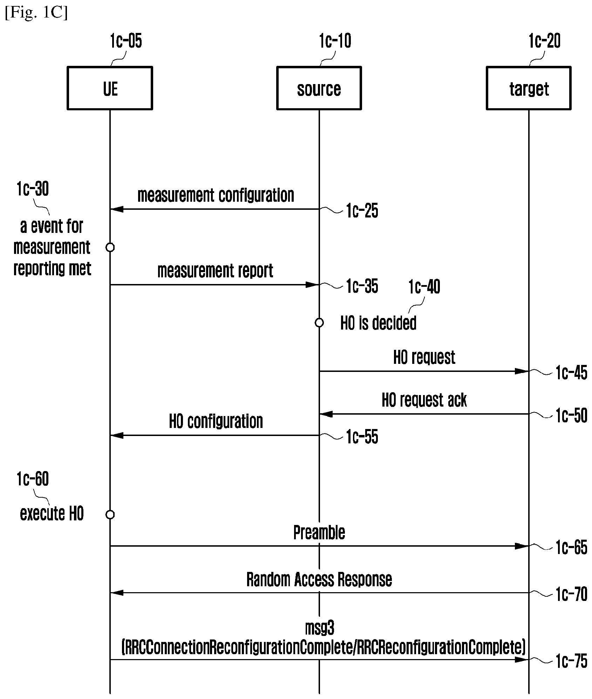

FIG. 1C illustrates a flowchart of a process of performing a first handover operation in a mobile communication system.

A UE 1c-05 receives an RRC message including measurement configuration information from a source cell 1c-10 (indicated by reference numeral 1c-25). The UE measures the signal quality of a serving cell and neighboring cells by applying the measurement configuration information, and if a periodic or configured event occurs (indicated by reference numeral 1c-30), the UE reports the collected cell measurement information to the source cell (indicated by reference numeral 1c-35). The source cell determines whether to trigger a first handover operation based on the reported cell measurement information (indicated by reference numeral 1c-40). For example, in the case where Event A3 (neighbor becomes offset better than SpCell) is satisfied, and thus cell measurement information is reported, the source cell may determine the first handover. If it is determined to trigger the first handover, the source cell requests the first handover from one target cell 1c-20 through an inter-node message (indicated by reference numeral 1c-45). The target cell that receives the request accepts the request and transmits handover configuration information required for the first handover operation to the source cell (indicated by reference numeral 1c-50). The source cell includes the handover configuration information, received from the target cell, and additional configuration information in an RRC message, and transmits the RRC message to the UE (indicated by reference numeral 1c-55). The configuration information includes a target cell ID, frequency information, configuration information required for an operation of random access to the target cell (dedicated preamble information, dedicated radio resource information, etc.), transmission power information, and C-RNTI information used in the target cell.

Upon receiving the handover configuration information, the UE immediately performs a process of random access to the target cell and starts (or drives)a T304 timer (indicated by reference numeral 1c-60). The UE transmits the received preamble (indicated by reference numeral 1c-65). If a dedicated preamble is not provided, the UE transmits one of contention-based preambles. The target cell having received the preamble transmits a random access response message (RAR) to the UE (indicated by reference numeral 1c-70). The UE transmits message 3 to the target cell using UL grant information stored in the RAR (indicated by reference numeral 1c-75). The message 3 stores an RRCConnectionReconfigurationComplete message in the case of the LTE system or an RRCReconfigurationComplete message in the case of the NR system. If the random access process is successfully completed, it is considered that the first handover is successfully completed, and the running T304 timer is stopped. If the first handover is not successfully completed until the T304 timer expires, it is considered as handover failure.

FIG. 1D illustrates a flowchart of a process of performing a second handover operation in a mobile communication system.

A UE 1d-05 reports its own capability information to a source cell 1d-10 (indicated by reference numeral 1d-25). The capability information indicates whether the UE supports second handover. The UE receives an RRC message including measurement configuration information from a source cell (indicated by reference numeral 1d-30). The UE measures the signal quality of a serving cell and neighboring cells by applying the measurement configuration information, and if a periodic or configured event occurs (indicated by reference numeral 1d-35), the UE reports the collected cell measurement information to the source cell (indicated by reference numeral 1d-40). The source cell determines whether to trigger a second handover operation based on the reported cell measurement information (indicated by reference numeral 1d-45). In order to configure the second handover, the UE needs to support the second handover. If it is determined to trigger the second handover, the source cell requests the second handover from one or more target cells 1d-20 through an inter-node message (indicated by reference numeral 1d-50). The target cells that receive the request accept the request and transmit handover configuration information required for the second handover operation to the source cell (indicated by reference numeral 1d-55). Target cells that do not accept the request are excluded from performing the second handover. The source cell includes the handover configuration information, received from the target cells, and additional configuration information in an RRC message, and transmits the RRC message to the UE (indicated by reference numeral 1d-60). The configuration information includes each ID of the target cells, frequency information, configuration information required for an operation of random access to the target cells (dedicated preamble information and dedicated radio resource information for each target cell, etc.), transmission power information, C-RNTI information used in each target cell, conditions for triggering an operation of random access to each target cell, and the like. Each of the above conditions may be different for each target cell, and a plurality of conditions may be configured for one target cell.

Upon receiving the handover configuration information, the UE evaluates whether the received condition(s) are satisfied (indicated by reference numeral 1d-65). If a condition related to a specific target cell is satisfied, the UE performs a random access process with respect to the target cell (indicated by reference numeral 1d-70), and starts a first timer (indicated by reference numeral 1d-75). For example, if Event A3 (neighbor becomes offset better than SpCell) is configured based on the above condition and the condition is satisfied, the UE transmits the received preamble to the related target cell. If a dedicated preamble is not provided, the UE transmits one of contention-based preambles. A target cell that receives the preamble transmits a random access response message (RAR) to the UE. The UE transmits message 3 to the target cell using UL grant information stored in the RAR. The message 3 stores an RRCConnectionReconfigurationComplete message in the case of the LTE system or an RRCReconfigurationComplete message in the case of the NR system. If the random access process is successfully completed, it is considered that the second handover is successfully completed, and the running first timer is stopped. If the second handover is not successfully completed until (or before) the first timer expires (indicated by reference numeral 1d-80), it is considered handover failure. At this time, RLF due to handover failure is declared (indicated by reference numeral 1d-85).

The UE collects and stores information related to a CHO failure (indicated by reference numeral 1d-90). Thereafter, in the case where the UE is successfully switched to the connected mode, the UE transmits an RRC message including an indicator indicating that there is information collected at the time of RLF due to the conditional handover failure to the base station (indicated by reference numeral 1d-95). The RRC message is an RRCSetupComplete or RRCReestablishmentComplete message. The UE receives an RRC message instructing to report the information from the base station (indicated by reference numeral 1d-100). The UE reports the information, which has been collected and stored, to the base station (indicated by reference numeral 1d-105).

If handover is successfully completed, the UE deletes the handover configuration information. In the case where the source cell receives handover success reporting from the target cell, the source cell deletes context information of the UE. Whether handover succeeds may be determined based on the UE context release message, which is an inter-node message transmitted from the target cell to the source cell. In addition, the source cell instructs other candidate target cells, which are included in the handover configuration information, to delete the handover configuration information (or UE context information) or provides notification that the handover configuration information is no longer valid. The candidate target cells themselves may delete the handover configuration information if a predetermined time interval has elapsed after receiving the handover request, even without receiving the instruction from the source cell.

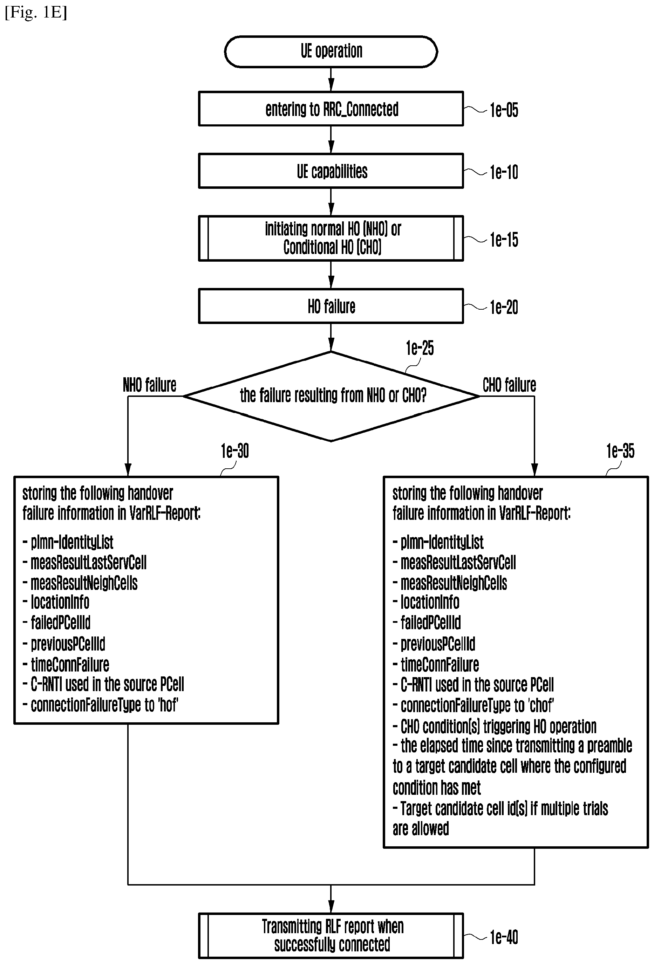

FIG. 1E illustrates a flowchart of a UE operation in the disclosure.

In operation 1e-05, a UE enters a connected mode.

In operations 1e-10, the UE transmits capability information including an indicator indicating whether the UE itself supports a second handover (condition-based hand over, conditional handover (CHO)) to the base station.

In operation 1e-15, the UE receives configuration of a first handover or a second handover from the base station.

In operation 1e-20, the UE determines that the configured handover has failed.

In operation 1e-25, the UE determines whether the configured handover is a first handover or a second handover. That is, the UE determines whether the handover is triggered by a condition (random access to a target cell).

In operation 1e-30, if the first handover is triggered and thus RLF occurs, the following pieces of information are collected and stored.
- phnn-IdentityList
- measResultLastServCell
- measResultNeighCells
- locationInfo
- failedPCellId
- previousPCellId
- timeConnFailure
- C-RNTI used in the source PCell
- connectionFailureType set to 'hof'

In operation 1e-35, if the second handover is triggered and thus RLF occurs, the following pieces of information are collected and stored.
- pImn-IdentityList
- measResultLastServCell
- measResultNeighCells
- locationInfo
- failedPCellId
- previousPCellId
- timeConnFailure
- C-RNTI used in the source PCell
- connectionFailureType to 'chof': It defines a new cause indicating RLF occurrence during performance of the second handover.
- CHO condition(s) triggering HO operation: condition information that triggers a handover operation, for example, an event type (Event A3, etc.), threshold information applied to a corresponding event, cell measurement value information in the case where the event is satisfied, and the like.
- the elapsed time since transmitting a preamble to a target candidate cell where the configured condition has met: the time it takes for the RLF to occur after the preamble is transmitted to a target cell where the configured condition is satisfied, or the time it takes for the RLF to occur after the configured condition is satisfied
- Target candidate cell id(s) if multiple trials are allowed: if handover to multiple target cells is performed, ID list information of the target cells

Thereafter, in operation 1e-40, if the mode of the UE is successfully switched to a connected mode, the UE reports the stored information.

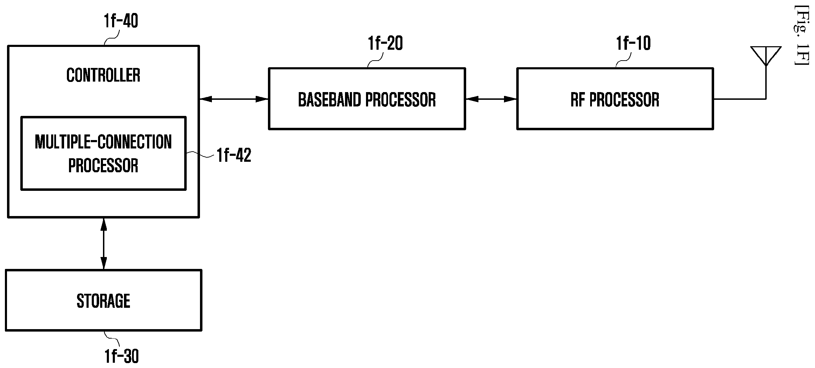

FIG. 1F illustrates the structure of a UE.

Referring to FIG. 1F, the UE includes a radio frequency (RF) processor 1f-10, a baseband processor 1f-20, a storage 1f-30, and a controller 1f-40.

The RF processor 1f-10 performs a signal transmission or reception function, such as band conversion and amplification of the signal, through a radio channel. That is, the RF processor 1f-10 up-converts a baseband signal provided from the baseband processor 1f-20 into an RF band signal and transmits the RF band signal through an antenna, and down-converts the RF band signal, received through the antenna, into a baseband signal. For example, the RF processor 1f-10 may include a transmission filter, a reception filter, an amplifier, a mixer, an oscillator, a digital-to-analog convertor (DAC), an analog-to-digital convertor (ADC), and the like. In FIG. 1F, only one antenna is shown, but the terminal may include a plurality of antennas. Further, the RF processor 1f-10 may include a plurality of RF chains. Furthermore, the RF processor 1f-10 may perform beamforming. For the beamforming, the RF processor 1f-10 may adjust the phase and magnitude of each of the signals transmitted or received through a plurality of antennas or antenna elements. In addition, the RF processor may perform a MIMO operation, and may receive multiple layers at the time of performing the MIMO operation.

The baseband processor 1f-20 performs a function of conversion between a baseband signal and a bit string according to the physical layer standard of a system. For example, at the time of transmitting data, the baseband processor 1f-20 generates complex symbols by encoding and modulating a transmission bit stream. In addition, at the time of receiving data, the baseband processor 1f-20 reconstructs a reception bit string by demodulating and decoding the baseband signal provided from the RF processor 1f-10. For example, according to an orthogonal frequency division multiplexing (OFDM) scheme, at the time of transmitting data, the baseband processor 1f-20 generates complex symbols by encoding and modulating a transmission bit stream, maps the complex symbols onto sub-carriers, and then configures OFDM symbols by performing an inverse fast Fourier transform (IFFT) operation and insertion of a cyclic prefix (CP). In addition, at the time of receiving data, the baseband processor 1f-20 divides the baseband signal provided from the RF processor 1f-10 in OFDM symbol units, reconstructs the signals, which have been mapped onto the sub-carriers, through a fast Fourier transform (FFT) operation, and then reconstructs the reception bit string by demodulating and decoding the mapped signals.

The baseband processor 1f-20 and the RF processor 1f-10 transmit or receive a signal as described above. Accordingly, each of the baseband processor 1f-20 and the RF processor 1f-10 may be referred to as a transmitter, a receiver, a transceiver, or a communication unit. Furthermore, at least one of the baseband processor 1f-20 and the RF processor 1f-10 may include a plurality of communication modules to support different radio access technologies. In addition, at least one of the baseband processor 1f-20 and the RF processor 1f-10 may include different communication modules to process signals in different frequency bands. For example, the different radio access technologies may include a wireless LAN (e.g., IEEE 802.11), a cellular network (e.g., LTE), and the like. In addition, the different frequency bands may include a super high frequency (SHF) (e.g., 2.NRHz, NRHz) band, and a millimeter wave (e.g., 60 GHz) band.

The storage 1f-30 stores data, such as a basic program, an application, and configuration information for performing the UE operation. In particular, the storage 1f-30 stores information related to a second access node for performing wireless communication using a second radio access technology. The storage 1f-30 provides stored data at the request of the controller 1f-40.

The controller 1f-40 controls the overall operation of the terminal. For example, the controller 1f-40 transmits or receives a signal through the baseband processor 1f-20 and the RF processor 1f-10. In addition, the controller 1f-40 records or reads data in or from the storage 1f-30. To this end, the controller 1f-40 may include at least one processor. For example, the controller 1f-40 may include a communication processor (CP) for performing control for communication and an application processor (AP) for controlling a higher layer such as an application.

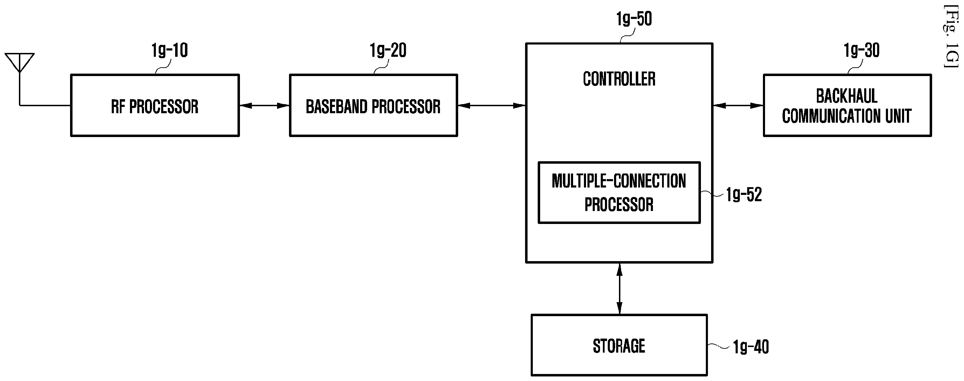

FIG. 1G illustrates a block configuration of a base station in a wireless communication system according to an embodiment.

As shown in FIG. 1G, the base station includes an RF processor 1g-10, a baseband processor 1g-20, a backhaul communication unit 1g-30, a storage 1g-40, and a controller 1g-50.

The RF processor 1g-10 performs a function for transmitting or receiving a signal, such as band conversion and amplification of the signal, through a radio channel. That is, the RF processor 1g-10 up-converts a baseband signal provided from the baseband processor 1g-20 into an RF band signal and transmits the RF band signal through an antenna, and down-converts the RF band signal, received through the antenna, into a baseband signal. For example, the RF processor 1g-10 may include a transmission filter, a reception filter, an amplifier, a mixer, an oscillator, a digital-to-analog convertor (DAC), an analog-to-digital convertor (ADC), and the like. In FIG. 1G, only one antenna is shown, but a first access node may include a plurality of antennas. Further, the RF processor 1g-10 may include a plurality of RF chains. Furthermore, the RF processor 1g-10 may perform beamforming. For the beamforming, the RF processor 1g-10 may adjust the phase and magnitude of each of the signals transmitted or received through a plurality of antennas or antenna elements. In addition, the RF processor may perform a MIMO operation by transmitting one or more layers.

The baseband processor 1g-20 performs a function of conversion between a baseband signal and a bit string according to the physical layer standard of a first radio access technology. For example, at the time of transmitting data, the baseband processor 1g-20 generates complex symbols by encoding and modulating a transmission bit stream. In addition, at the time of receiving data, the baseband processor 1g-20 reconstructs a reception bit string by demodulating and decoding the baseband signal provided from the RF processor 1g-10. For example, according to an orthogonal frequency division multiplexing (OFDM) scheme, at the time of transmitting data, the baseband processor 1g-20 generates complex symbols by encoding and modulating a transmission bit stream, maps the complex symbols onto sub-carriers, and then configures OFDM symbols by performing an IFFT operation and CP insertion. In addition, at the time of receiving data, the baseband processor 1g-20 divides the baseband signal provided from the RF processor 1g-10 in OFDM symbol units, reconstructs the signals, which have been mapped onto the sub-carriers, through an FFT operation, and then reconstructs the reception bit string by demodulating and decoding the mapped signals. The baseband processor 1g-20 and the RF processor 1g-10 transmit or receive a signal as described above. Accordingly, each of the baseband processor 1g-20 and the RF processor 1g-10 may be referred to as a transmitter, a receiver, a transceiver, a communication unit, or wireless communication unit.

The backhaul communication unit 1g-30 provides an interface for communication with other nodes in a network. That is, the backhaul communication unit 1g-30 converts a bit string, transmitted from a main base station to another node, for example, an auxiliary base station, a core network, etc., into a physical signal, and converts the physical signal, received from the another node, into a bit string.

The storage 1g-40 stores data, such as a basic program, an application, and configuration information for performing the operation of a main base station. In particular, the storage 1g-40 may store information on a bearer allocated to the connected UE, a measurement result reported by the connected UE, and the like. In addition, the storage 1g-40 may store information serving as a criterion for determining whether to provide or terminate multiple connections to the terminal. In addition, the storage 1g-40 provides stored data at the request of the controller 1g-50.

The controller 1g-50 controls the overall operation of the main base station. For example, the controller 1g-50 transmits or receives a signal through the baseband processor 1g-20 and the RF processor 1g-10, or through the backhaul communication unit 1g-30. In addition, the controller 1g-50 records or reads data in or from the storage 1g-40. To this end, the controller 1g-50 may include at least one processor.

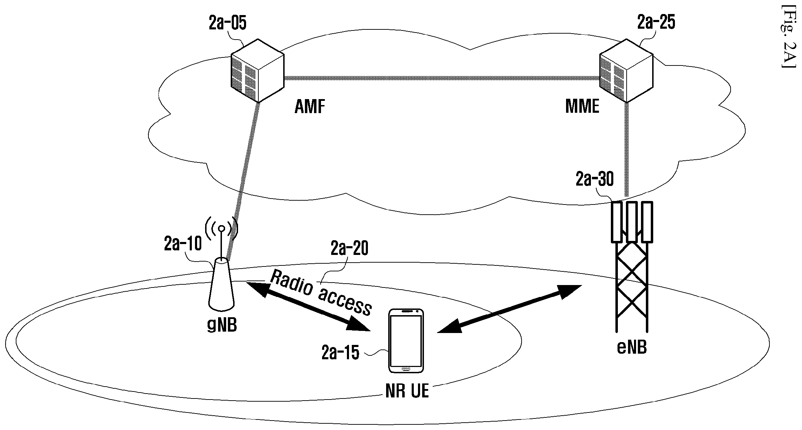

FIG. 2A illustrates an EN-DC structure of a next-generation mobile communication system.

EN-DC refers to dual connectivity between EUTRAN (LTE system) and NR (next-generation mobile communication system), and corresponds to a scenario in which one UE is simultaneously connected to two heterogeneous systems to receive service.

Referring to FIG. 2A, a radio access network of a next-generation mobile communication system includes a next generation base station (new radio node B (hereinafter referred to as "gNB") 2a-10 and an AMF (new radio core network) 2a-05. A user equipment (hereinafter referred to as NR UE or a terminal) 2a-15 accesses an external network via gNB 2a-10 and AMF 2a-05.

In FIG. 2A, the gNB 2a-10 corresponds to an evolved node B (eNB) of the legacy LTE system. The gNB is connected to the NR UE 2a-15 via a radio channel and may provide excellent service compared to the legacy node B. In the next-generation mobile communication system, since all types of user traffics are serviced through a shared channel, there is a need for a device for performing scheduling by collecting state information, such as buffer states, available transmission power states, and channel states of UEs. Further, the gNB 2a-10 is used to perform such a function of the device. In general, one gNB controls a plurality of cells. In order to implement ultra-high-speed data transmission exceeding that of legacy LTE, the gNB may have the legacy maximum bandwidth or more, and may additionally employ beamforming technology using orthogonal frequency division multiplexing (OFDM) as a radio access technology. In addition, the gNB adopts an adaptive modulation & coding (hereinafter referred to as AMC) scheme that determines a modulation scheme and a channel coding rate based on the channel state of a UE. The AMF 2a-05 performs functions, such as mobility support, bearer setup, and QoS setup. The AMF 2a-05 is a device that is used to perform various control functions as well as a mobility management function for a UE, and is connected to a plurality of base stations. In addition, the next-generation mobile communication system may also operate in conjunction with the legacy LTE system, and the AMF is connected to an MME 2a-25 via a network interface. The MME may be connected to an eNB 2a-30, that is, the legacy base station. In the EN-DC scenario, the gNB is connected to the eNB so as to be controlled.

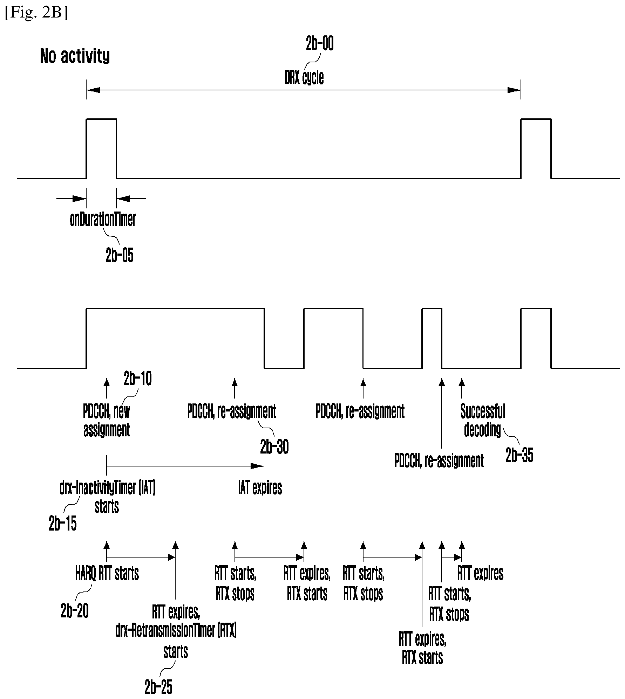

FIG. 2B illustrates a DRX operation. The DRX operation is applied to minimize the amount of power consumed by a UE, and is technology for performing monitoring only in a predetermined PDCCH in order to obtain scheduling information. The DRX operation is operable both in an idle mode and in a connected mode, and operation methods thereof are slightly different. The disclosure relates to a connected mode. Continuous monitoring of the PDCCH by the UE in order to acquire scheduling information may increase power consumption. For a basic DRX operation, a DRX cycle 2b-00 is defined and the PDCCH is monitored only during an on-duration time period 2b-05. In a connected mode, two types of values, namely a long DRX and a short DRX, are configured for the DRX cycle. A long DRX cycle is applied to the general case, and if necessary, a base station may trigger a short DRX cycle using a MAC control element (CE). After a predetermined period of time has passed, the UE switches the short DRX cycle into the long DRX cycle. Initial scheduling information of a specific UE is provided only in the predetermined PDCCH. Accordingly, the UE can minimize power consumption by periodically monitoring only the PDCCH. If scheduling information for a new packet is received by the PDCCH during the on-duration time period 2b-05 (indicated by reference numeral 2b-10), the UE starts a DRX inactivity timer (indicated by reference numeral 2b-15). The UE maintains an active state during a DRX inactivity timer, that is, the UE continues to perform PDCCH monitoring. Further, the UE starts an HARQ RTT timer (indicated by reference numeral 2b-20). The HARQ RTT timer is applied to prevent the UE from unnecessarily monitoring the PDCCH during the HARQ round trip time (RTT) period, and it is not necessary for the UE to monitor the PDCCH during a timer operation period of the HARQ RTT timer. However, while the DRX inactivity timer and the HARQ RTT timer are concurrently operating, the UE continues PDCCH monitoring based on the DRX inactivity timer. If the HARQ RTT timer expires, a DRX retransmission timer starts (indicated by reference numeral 2b-25). While the DRX retransmission timer is running, the UE needs to perform PDCCH monitoring. In general, during the operation time of the DRX retransmission timer, scheduling information for HARQ retransmission is received (indicated by reference numeral 2b-30). Upon receiving the scheduling information, the UE immediately stops the DRX retransmission timer and restarts the HARQ RTT timer. The above operation continues until the packet is successfully received (indicated by reference numeral 2b-35).

The configuration information related to the DRX operation in the connected mode is transmitted to the UE via the RRCConnectionReconfiguration message. An on-duration timer, a DRX inactivity timer, and a DRX retransmission timer are defined according to the number of PDCCH subframes. After passage of a configured number of subframes defined as PDCCH subframes from the starting of a timer, the timer expires. All downlink subframes belong to the PDCCH subframe in FDD, and a downlink subframe and a special subframe correspond to the PDCCH subframe in TDD. In TDD, a downlink subframe, an uplink subframe, and a special subframe exist in the same frequency band. The downlink subframe and the special subframe, among the downlink subframe, the uplink subframe, and the special subframe, are considered to be PDCCH subframes.

The base station may configure two states, namely of longDRX and shortDRX. In general, the base station may use one of the two states in consideration of the characteristics of a configured DRB, UE mobility record information, and power preference indication information reported from the UE. Transition between the two states is performed by transmitting a specific MAC CE to the UE or whether a specific timer expires.

Since only two types of DRX cycles may be configured in the existing LTE technology, it is not possible to dynamically change a DRX cycle according to various DRB characteristics, traffic patterns, buffer conditions, and the like.

In the disclosure, a plurality of DRXs may be configured, and one of the configured plurality of DRXs may be applied to one or more serving cells. In particular, in order to minimize UE power consumption, a group including one or more serving cells corresponds to one DRX configuration, and the serving cells belonging to the group apply the DRX configuration. For example, in the case of serving cells operating in the same RF chain, it is desirable to apply the same DRX configuration to minimize UE power consumption. To this end, the UE needs to provide the base station with preferred group information. In the disclosure, the group information is referred to as DRX group information.

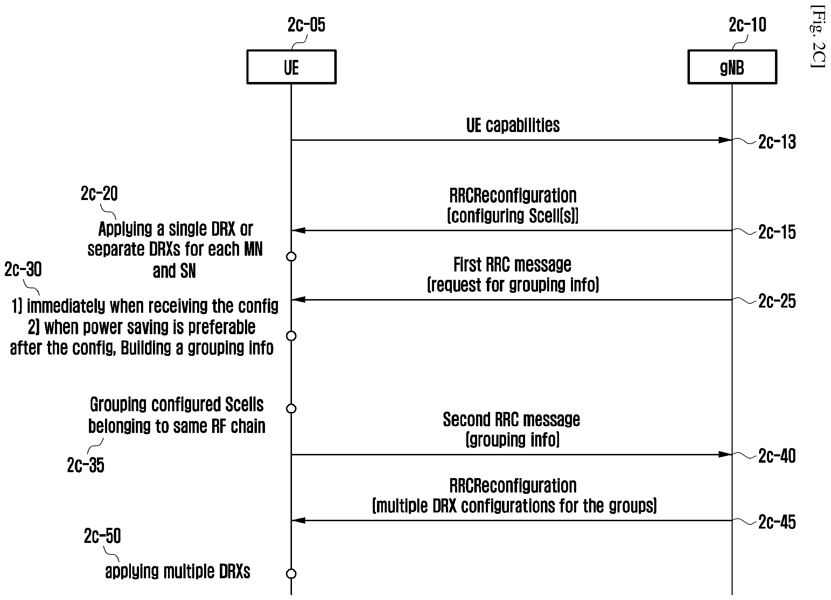

FIG. 2C illustrates a flowchart of a method for providing preferred DRX configuration information by a UE in the disclosure.

A UE 2c-05 reports its own capability information to a base station (i.e. eNB or gNB) 2c-10 (indicated by reference numeral 2c-13). The capability information includes an indicator indicating that the UE is capable of providing information of the preferred DRX group. The base station configures an SCell for the connected mode UE (indicated by reference numeral 2c-15). At this time, the base station provides one DRX in the case of carrier aggregation (CA), and provides a DRX for an MCG and a DRX for an SCG, respectively, in the case of dual connectivity (DC). The UE applies the DRX by default. In the case of CA, the UE applies one DRX to all serving cells. Alternatively, even in the case of CA, the UE may provide, to the base station, a DRX applied to serving cells belonging to frequency range 1 (FR1) and a DRX applied to serving cells belonging to frequency range 2 (FR2). In this case, the UE applies the two DRXs to serving cells belonging to FR1 and FR2, respectively, by default. At this time, the DRX group corresponds to a group of serving cells belonging to FR1 or a group of serving cells belonging to FR2. In the case of DC, the UE applies, by default, the DRX for the MCG and the DRX for the SCG to serving cells belonging to the MCG and the SCG, respectively (indicated by reference numeral 2c-20). At this time, the DRX group corresponds to a group of serving cells belonging to the MCG or a group of serving cells belonging to the SCG. Depending on the serving cells to which the RF chain of the UE is applied, the DRX applied to each serving cell minimize UE power consumption, which may not be optimized.

The base station provides an indication that DRX group information reporting is possible, using an RRC message, to the UE (indicated by reference numeral 2c-25). Upon receiving the RRC message, the UE reports preferred DRX group information to the base station immediately or if it is determined that readjustment of the DRX group is required (indicated by reference numeral 2c-30). For example, if the serving cells belonging to FR1 are configured for the UE and some serving cells are operated using different RF chains, the UE may propose a new DRX group using an RRC message. At this time, the UE may configure serving cells using the same RF chain as one DRX group, and may report the DRX group to the base station (indicated by reference numeral 2c-35). Together with serving cell ID list information belonging to one DRX group, preferred DRX configuration information corresponding to the group may be reported to the base station. In order to reduce signaling overhead, the UE may provide only one piece of DRX group information, and serving cells that do not belong to the one DRX group may be assumed to implicitly belong to another group. The DRX configuration information denotes the on-duration timer, the DRX inactivity timer, the HARQ RTT timer, and the DRX retransmission timer.

The UE transmits the configured DRX group information to the base station (indicated by reference numeral 2c-40). The base station readjusts the DRX using an RRC message in consideration of the group information, and transmits the readjusted DRX to the UE (indicated by reference numeral 2c-45). The base station provides a list of serving cells belonging to each DRX group and DRX configuration information corresponding thereto. In the case of DC, the grouping and DRX configuration information corresponding thereto may be independently configured by MAC entities of MN and SN and then provided to the UE. The UE may apply the configured DRX to serving cells belonging to the corresponding group (indicated by reference numeral 2c-50).

As a method for mapping DRX configuration information to each DRX group, an index for mapping the information and the group is proposed. Each group has an ID, and the group ID to which the DRX is applied may be stored for each DRX configuration information. At this time, the ID of the group to which the PCell belongs is always configured to be 0 or 1. Alternatively, the first configuration information among the list of multiple pieces of DRX configuration information is always applied to the group to which the PCell belongs.

In the case of indicating serving cells belonging to each DRX group, a serving cell index or ID may be used. Alternatively, the frequency band index to which each DRX group belongs may be indicated; that is, serving cells belonging to each frequency band implicitly belong to each DRX group. For example, DRX cell group 0 = [FB1, FB2], DRX cell group 1 = [FB3], and so on.

The method for mapping the DRX configuration information to each DRX group and the method for indicating serving cells belonging to the DRX group are applied both to the case where a base station configures DRX for each DRX group for a UE and to the case where a UE reports, to a base station, a preferred DRX group and a DRX corresponding thereto.

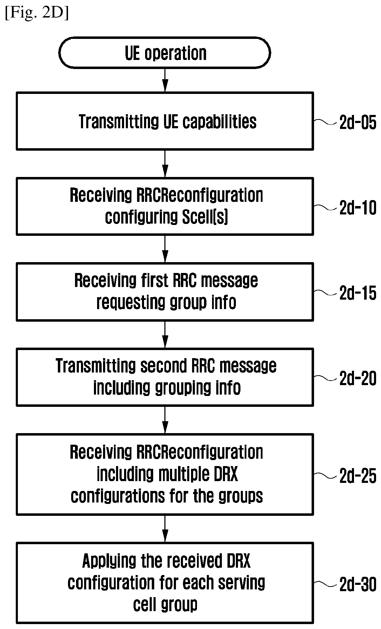

FIG. 2D illustrates a flowchart of a UE operation in the disclosure.

In operation 2d-05, a UE reports its own capability information to a base station. The capability information includes an indicator indicating that the UE is capable of providing information of the preferred DRX group.

In operation 2d-10, the UE receives configuration of an SCell from the base station.

In operation 2d-15, the UE receives an RRC message indicating that DRX group information reporting is possible.

In operation 2d-20, the UE, which has received the message, transmits preferred DRX group information to the base station immediately upon receiving the message or if it is determined that re-adjustment of the DRX group is required.

In operation 2d-25, the UE is provided with the re-adjusted DRX and DRX group from the base station. In operation 2d-30, the UE applies the configured DRX to serving cells belonging to the corresponding group.

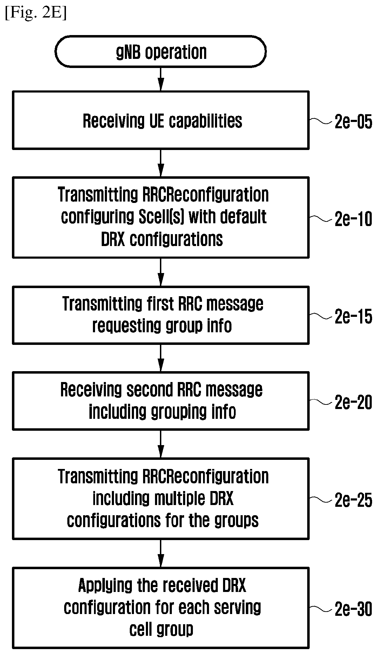

FIG. 2E illustrates a flowchart of a base station operation in the disclosure.

In operation 2e-05, the base station receives capability information reporting from one UE.

In operation 2e-10, the base station configures an SCell for the connected mode UE.

In operation 2e-15, the base station provides an indication that DRX group information reporting is possible, using an RRC message, to the UE.

In operation 2e-20, the base station receives preferred DRX group information from the UE.

In operation 2e-25, the base station reconfigures the DRX using an RRC message in consideration of the group information.

In operation 2e-30, the base station applies the configured DRX to serving cells belonging to the corresponding group.

According to another method, information of frequency bands operable in the same RF chain is stored in the capability information in the case where the UE reports the capability information to the base station. That is, an index indicating the RF chain can be stored for each supported frequency band. If two frequency bands have the same index, the serving cells of the frequency bands are operable in the same RF chain. The base station may configure the same DRX for one or more serving cells operable in the same RF chain based on the capability information.

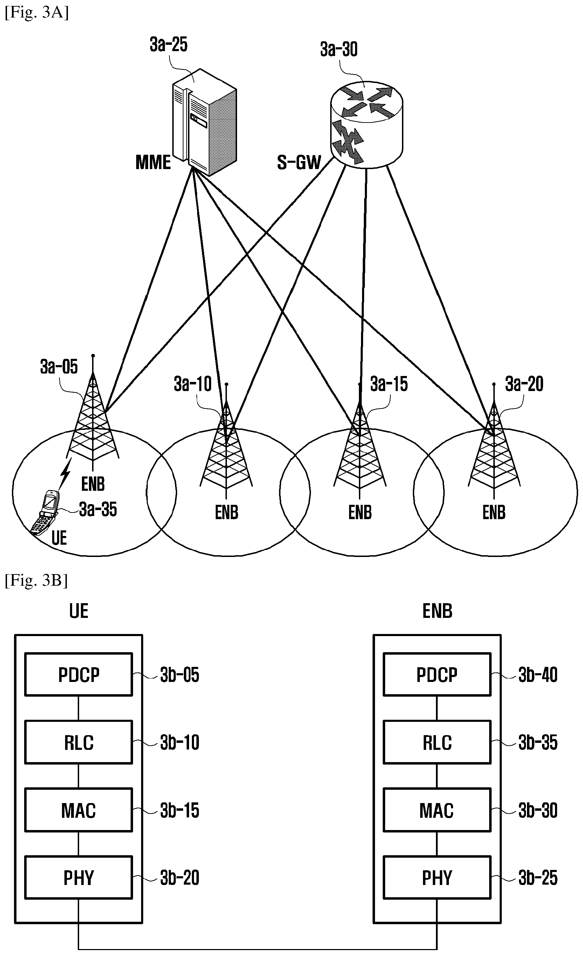

FIG. 3A illustrates the structure of an LTE system to which the disclosure is applied.

Referring to FIG. 3A, a radio access network of the LTE system includes next-generation base stations (also referred to as evolved node Bs, hereinafter referred to as ENBs, Node Bs or base stations) 3a-05, 3a-10, 3a-15, and 3a-20, a mobility management entity (MME) 3a-25, and a serving gateway (S-GW) 3a-30. A user equipment (hereinafter referred to as UE or terminal) 3a-35 accesses an external network through the ENBs 3a-05, 3a-10, 3a-15, and 3a-20 and the S-GW 3a-30.

In FIG. 3A, the ENBs 3a-05, 3a-10, 3a-15, and 3a-20 correspond to existing Node B of a UMTS system. The ENBs are connected to the UE 3a-35 via a radio channel and performs a more complicated role than that of existing Node Bs. In the LTE system, since all user traffic, including real-time services such as voice over IP (VoIP), delivered over the Internet protocol, is serviced through a shared channel, a device for collecting and scheduling state information such as buffer states, available transmission power state, and channel status of UEs is required. The ENBs 3a-05, 3a-10, 3a-15, and 3a-20 are used to perform such a function of the device. In general, one ENB controls multiple cells. For example, in order to implement a transmission rate of 100 Mbps, the LTE system uses orthogonal frequency division multiplexing (OFDM) as a radio access technology in the bandwidth of 20 MHz, for example. In addition, the LTE system adopts an adaptive modulation & coding (hereinafter referred to as AMC) scheme for determining a modulation scheme and a channel coding rate according to the state of a channel used by a terminal. The S-GW 3a-30 is a device for providing a data bearer and generating or removing a data bearer under the control of the MME 3a-25. The MME is a device that is used to perform various control functions in addition to mobility management functions for terminals, and is connected to multiple base stations.

FIG. 3B illustrates a radio protocol structure in an LTE system to which the disclosure is applied.

Referring to FIG. 3B, the radio protocol of the LTE system includes packet data convergence protocols (PDCPs) 3b-05 and 3b-40, radio link controls (RLCs) 3b-10 and 3b-35, and medium access controls (MACs) 3b-15 and 3b-30, in a UE and an eNB, respectively. The packet data convergence protocols (PDCPs) 3b-05 and 3b-40 are used to perform operations, such as IP header compression/restoration, and radio link controls (hereinafter referred to as RLCs) 3b-10 and 3b-35 reconfigure the PDCP packet data unit (PDU) to an appropriate size to perform an ARQ operation. MACs 3b-15 and 3b-30 are connected to multiple RLC layer devices configured in one terminal, and may perform an operation of multiplexing RLC PDUs with an MAC PDU and de-multiplexing the RLC PDUs from the MAC PDU. Physical layers 3b-20 and 3b-25 may perform an operation of channel coding and modulating higher layer data, generating the higher layer data into an OFDM symbol, transmitting the OFDM symbol through a radio channel, or demodulating an OFDM symbol received through a radio channel, channel-decoding the OFDM symbol, and transmitting the OFDM symbol to a higher layer.

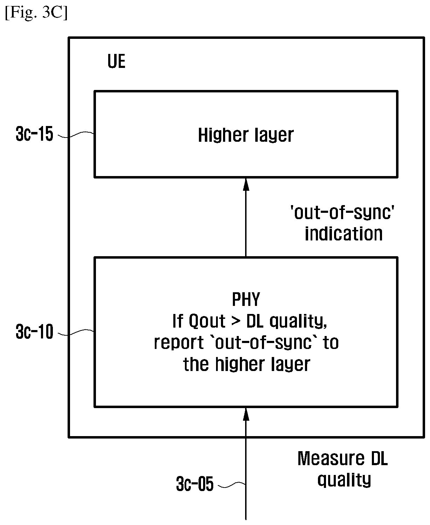

FIG. 3C illustrates a radio-link-monitoring (RLM) operation in the disclosure.

A physical layer (PHY) of a UE measures downlink signal quality from a CRS of a serving cell (indicated by reference numeral 3c-05). The physical layer determines whether the signal quality is lower than a specific threshold Qout (indicated by reference numeral 3c-10). The threshold is a signal quality value corresponding to a specific BLER measured in a PDCCH. If the signal quality is lower than a specific threshold Qout, the physical layer delivers an "out-of-sync" indicator to a higher layer. In LTE technology, the above operation is called "RLM". If the indicator is transmitted to the higher layer a specific number of times or more, the higher layer starts a specific timer, and if the timer expires, the higher layer declares the RLF (indicated by reference numeral 3c-15).

FIG. 3D illustrates a radio link failure (RLF) operation in the disclosure.

As described above, the RLF may be declared based on the result of RLM. The physical layer of a UE determines whether downlink signal quality is lower than a specific threshold Qout based on the CRS of a serving cell at a specific cycle or every Qout evaluation period. If the signal quality is lower than the specific threshold Qout, the physical layer transmits an "out-of-sync" indicator to the higher layer. After a first indicator is transmitted to the higher layer (indicated by reference numeral 3d-05), if the indicator is transmitted to the higher layer a specific number of times N310, a specific timer T310 starts (indicated by reference numeral 3d-10). The physical layer determines whether the downlink signal quality is higher than a specific threshold Qin based on the CRS of the serving cell. If the signal quality is higher than the specific threshold Qin, the physical layer transmits an "in-sync" indicator to the higher layer. If the indicator is transmitted to the higher layer a specific number of times, the running timer T310 is stopped. If the timer T310 is not stopped but expires, the higher layer declares an RLF (indicated by reference numeral 3d-15). After declaring (or detecting) the RLF, the UE starts another timer T311. The UE finds a new suitable cell. If the UE does not find a suitable cell before the timer T311 expires, the UE goes to an idle mode ((indicated by reference numeral 3d-25). If the UE finds a new suitable cell before the timer expires, the UE starts a timer T301 and performs a re-establishment process on the new cell (indicated by reference numeral 3d-20). If the re-establishment is not successfully completed until the timer T301 expires, the UE goes to the idle mode (indicated by reference numeral 3d-30). If re-establishment is successful, the UE continues to maintain a connected mode for the cell. An RLF may be declared by an RLM operation or may be declared under another condition. An RLF may be declared if random access fails (indicated by reference numeral 3d-35). Furthermore, if a maximum retransmission number of times is reached in the RLC layer but a packet is not successfully transmitted, RLF is declared (indicated by reference numeral 3d-40). The operations of the T301 and the T311 are as follows.

**[Table 1]**

| **Timer** | **Start** | **Stop** | **At expiry** |
|---|---|---|---|
| T301 | Upon transmission of *RRCReestabilshmentR equest* | Upon reception of *RRCReestablishment* or *RRCSetupmessage* as well as in the case where the selected cell becomes unsuitable | Go to RRC IDLE |
| T311 | Upon initiating the RRC connection re-establishment procedure | Upon selection of a suitable NR cell or a cell using another RAT. | Enter RRC IDLE |

Another case where RLF is declared corresponds to the case where handover fails. If the UE receives the RRCConnectionReconfiguration message including handover configuration information and mobilityControlInfo IE (indicated by reference numeral 3d-45), the UE starts a timer T304. The value of the timer T304 is provided from the mobilityControlInfo. If random access to the target cell is not successfully completed until the timer expires, it is regarded as handover failure, and RLF is declared (indicated by reference numeral 3d-50).

The specific pieces of information collected in the case where RLF occurs in the UE are useful for optimizing a cell area. Therefore, the specific pieces of information are stored in the UE in the case where RLF occurs, and are then reported to the base station if the UE is successfully switched to the connected mode. The report is called an RLF report, and the specific pieces of information reported at that time are as follows.
- phnn-IdentityList
- measResultLastServCell
- measResultNeighCells
- locationInfo
- failedPCellId
- previousPCellId
- timeConnFailure
- C-RNTI used in the source PCell
- connectionFailureType

After RLF occurs, the UE performs cell selection and RRC reestablishment operations. At this time, the collected information may also be useful for optimizing the cell area. Therefore, the disclosure proposes a method for collecting specific information even after RLF occurs, and defines information to be collected at that time. In addition, the disclosure proposes a method for stopping the information collection operation based on an event or a timer. The proposed operation in the disclosure is referred to as enhanced RLF logging.

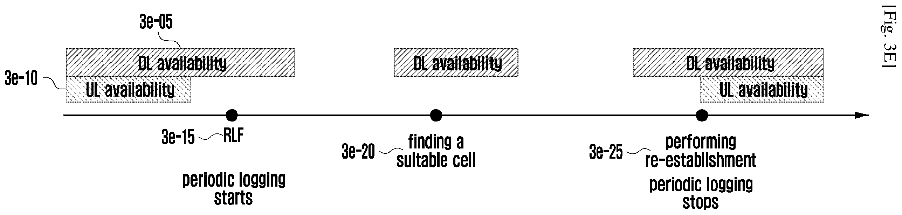

FIG. 3E illustrates a process of collecting useful information after RLF occurs in the disclosure.

In order for a connected mode UE to perform data transmission/reception operation normally, a minimum channel quality needs to be satisfied in both uplink and downlink. In the disclosure, this is called DL availability 3e-05 in the downlink and UL availability 3e-10 in the uplink. For example, if DL availability or UL availability is not satisfied, RLF may be declared (indicated by reference numeral 3e-15). At this time, the UE collects and stores valid information at the time point of occurrence of the RLF. In the disclosure, it is proposed to collect useful information periodically or based on an event even after the RLF occurs according to the configuration of a base station. One option for periodically collecting the useful information is collecting and storing useful information periodically after RLF occurs, and continuing the periodic logging until a new first timer expires or a specific condition is satisfied. The new first timer starts at the time point at which the RLF occurs. If the first timer expires, the periodic logging is stopped. The first timer is provided from the network. According to another method, the first timer is stopped in the case where a specific condition is satisfied. For example, the specific condition denotes:
- the case where the UE switches to an idle mode (RRC_Idle)
- the case where the UE switches to a connected mode (RRC_Connected)
- the case where the UE finds one suitable cell through a cell selection operation (indicated by reference numeral 3e-20)
- the case where the UE starts a re-establishment operation (indicated by reference numeral 3e-25)
- the case where the UE successfully completes the re-establishment operation
- the case where the UE starts the T301 timer
- the case where the T301 timer expires
- the case where the UE starts the T311 timer
- the case where the T311 timer expires

In the disclosure, if at least one of the conditions listed above is satisfied, the UE stops the logging. In addition, the first timer and the one or more conditions may be applied together.

The event-based option refers to collecting valid information at the time point at which a specific event occurs after RLF. For example, this option refers to an event in which the UE finds one suitable cell through a cell selection operation performed after RLF occurs, or an event in which the UE starts a re-establishment operation in the suitable cell. The UE collects and stores useful information only in the case where the event occurs.

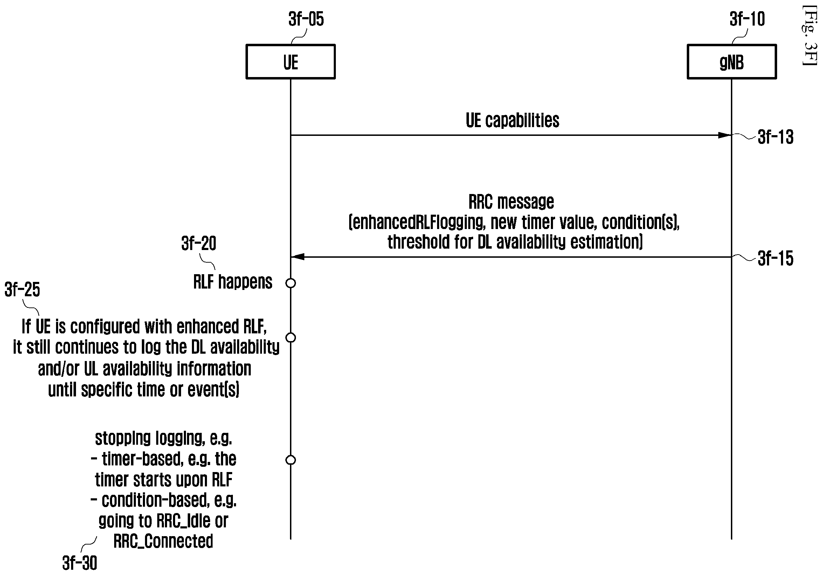

FIG. 3F illustrates a flowchart of a process of collecting useful information after RLF occurs in the disclosure.

A UE 3f-05 transmits UE capability information to a base station 3f-10 (indicated by reference numeral 3f-13). The capability information includes an indicator indicating whether the UE supports enhanced RLF logging. The enhanced RLF logging refers to an operation of logging information that the UE can collect until a specific time point after RLF occurs.

The base station provides configuration information related to the enhanced RLF logging to the UE supporting the enhanced RLF logging operation, using an RRC message (indicated by reference numeral 3f-15). The configuration information includes an indicator indicating to perform an enhanced RLF logging operation, the first timer value, a condition(conditions) for stopping the logging operation, a first threshold value of RSRP (or RSRQ) for DL availability evaluation, an indicator indicating periodic logging or event-based logging, and the event information. Since providing the configuration information itself indicates the enhanced RLF logging operation, an indicator indicating to perform the enhanced RLF logging operation may be omitted.

If RLF occurs (indicated by reference numeral 3f-20), the UE determines whether the enhanced RLF logging operation has been configured in advance. If the enhanced RLF logging operation has been configured, the UE collects useful information periodically or conditionally after RLF occurs (indicated by reference numeral 3f-25). The UE starts the first timer, and periodically collects and stores the useful information until the timer expires or until the specific condition is satisfied (indicated by reference numeral 3f-30). In the case of performing logging based on the event, the UE may collect and store the useful information only in the case where a specific event occurs.

Another method may be considered instead of a method for configuring the enhanced RLF logging using the RRC message. UEs that support the enhanced RLF logging perform the enhanced RLF logging if RLF occurs without previous configuration. According to this method, the configuration information is provided as system information broadcasted by a base station, not as a dedicated RRC message. For example, the configuration information may be stored in SIB 1.

In the disclosure, the information collected and stored through the enhanced RLF logging operation is proposed as follows.
- DL availability information, for example,
   an indicator indicating whether cell selection has been successfully completed,
   an indicator indicating that a suitable cell has been found,
   an indicator indicating that a cell satisfying S-Criteria has been found, and
   an indicator indicating that SS/PBCH that provides a better signal quality than the configured first threshold is being detected.
- UL availability information, for example,
   an indicator indicating whether the maximum transmission power of the UE is higher than the P-max value, and
   an indicator indicating whether the value of Pcompensation in S-Criteria is nonzero.
- Time information of each log (the time point at which a storing operation is performed)
- Start and end time points of T301 and T311 timers
- Channel quality information, such as uplink and downlink RSRP, RSRQ, etc. of the best cell, a suitable cell found through cell selection, a PCell in the case where RLF occurs, and adjacent neighbor cells
- Start and end time points of the first timer

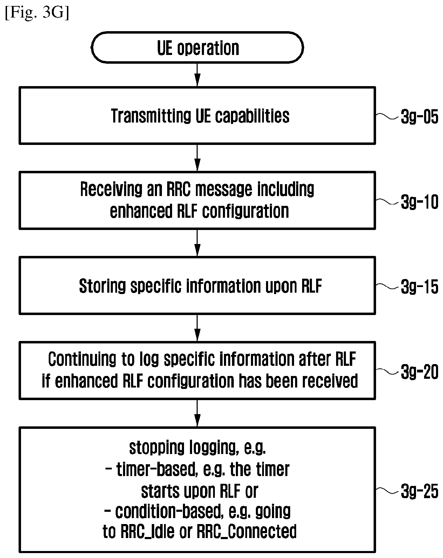

FIG. 3G illustrates a flowchart of a UE operation for collecting useful information after RLF occurs in the disclosure.

In operation 3g-05, the UE provides its own capability information to the base station.

In operation 3g-10, the base station configures an enhanced RLF logging operation for the UE, using an RRC message.

If RLF occurs in operation 3g-15, the UE stores specific information.

In operation 3g-20, the UE determines whether the enhanced RLF logging operation has been configured in advance, and if the enhanced RLF logging operation has been configured, the UE logs specific information even after the RLF occurs. At this time, the UE starts a first timer.

In operation 3g-25, the UE logs the specific information periodically or on an event basis until the first timer expires or until a specific condition is satisfied.

Although the present disclosure has been described with various embodiments, various changes and modifications may be suggested to one skilled in the art. It is intended that the present disclosure encompass such changes and modifications as fall within the scope of the appended claims.

## Claims

1. A method performed by a terminal in a mobile communication system, the method comprising:
receiving configuration information for a conditional handover, CHO, including information on one or more conditions for a candidate target cell for the CHO;
detecting a radio link failure, RLF, while performing the CHO based on the configuration information, and starting a first timer;
entering an idle state in case that the first timer expires, the first timer being configured to expire if the terminal does not find any suitable cell connectable with the terminal during running of the first timer; and
transmitting, to a first cell in which the terminal is able to transition from the idle state to a connected state, an RLF report message,
wherein the RLF report message includes information on a fulfilled condition among the one or more conditions for the candidate target cell for the CHO.

2. The method of claim 1, wherein the RLF report message further includes a cell identifier of a primary cell in which the RLF is detected, and
wherein the first timer is T311.

3. The method of claim 1, further comprising:
in case that the terminal finds a second cell that satisfies cell selection criteria before the first timer expires, attempting a radio connection reestablishment to the second cell and starting a second timer; and
entering the idle state, in case that the radio connection reestablishment to the second cell is not completed before the second timer expires,
wherein the second timer is T301.

4. The method of claim 1, wherein the RLF report message further includes identifier, ID, list information of at least one candidate target cell for the CHO.

5. A method performed by a base station in a mobile communication system, the method comprising:
transmitting configuration information for a conditional handover, CHO, including information on one or more conditions for a candidate target cell for the CHO;
performing a radio connection establishment with a terminal; and
receiving a radio link failure, RLF, report message from the terminal,
wherein the RLF report message includes information on a fulfilled condition among one or more conditions configured for a candidate target cell for the CHO.

6. The method of claim 5, wherein the RLF report message further includes a cell identifier of a primary cell in which the RLF is detected.

7. The method of claim 5, wherein the RLF report message further includes identifier, ID, list information of at least one candidate target cell for the CHO.

8. A terminal in a mobile communication system, the terminal comprising:
a transceiver; and
a controller configured to:
control the transceiver to receive configuration information for a conditional handover, CHO, including information on one or more conditions for a candidate target cell for the CHO,
detect a radio link failure, RLF, while performing the CHO based on the configuration information, and start a first timer,
enter an idle state in case that the first timer expires, the first timer being configured to expire if the terminal does not find any suitable cell connectable with the terminal during running of the first timer, and
control the transceiver to transmit, to a first cell in which the terminal is able to transition from the idle state to a connected state, an RLF report message,
wherein the RLF report message includes information on a fulfilled condition among the one or more conditions for the candidate target cell for the CHO.

9. The terminal of claim 8, wherein the RLF report message further includes a cell identifier of a primary cell in which the RLF is detected, and
wherein the first timer is T311.

10. The terminal of claim 8, wherein the controller is configured to, in case that the terminal finds a second cell that satisfies cell selection criteria before the first timer expires, attempt a radio connection reestablishment to the second cell and start a second timer.

11. The terminal of claim 10, wherein, the controller is configured to enter the idle state, in case that the radio connection reestablishment to the second cell is not completed before the second timer expires, and
wherein the second timer is T301.

12. The terminal of claim 8, wherein the RLF report message further includes identifier, ID, list information of at least one candidate target cell for the CHO.

13. A base station in a mobile communication system, the base station comprising:
a transceiver; and
a controller configured to:
transmit configuration information for a conditional handover, CHO, including information on one or more conditions for a candidate target cell for the CHO;
perform a radio connection establishment with a terminal, and
control the transceiver to receive a radio link failure, RLF, report message from the terminal,
wherein the RLF report message includes information on a fulfilled condition among one or more conditions configured for a candidate target cell for the CHO.

14. The base station of claim 13, wherein the RLF report message further includes a cell identifier of a primary cell in which the RLF is detected.

15. The base station of claim 13, wherein the RLF report message further includes identifier, ID, list information of at least one candidate target cell for the CHO.

## Patentansprüche

1. Verfahren, das von einem Endgerät in einem mobilen Kommunikationssystem ausgeführt wird, wobei das Verfahren Folgendes umfasst:
Empfangen von Konfigurationsinformationen für ein bedingtes Handover, CHO, einschließlich Informationen über eine oder mehrere Bedingungen für eine Kandidatenzielzelle für das CHO;
Erkennen eines Funkverbindungsfehlers, RLF, während des Ausführens des CHO basierend auf den Konfigurationsinformationen und Starten eines ersten Zeitgebers;
Eintreten in einen Leerlaufzustand, falls der erste Zeitgeber abläuft, wobei der erste Zeitgeber so konfiguriert ist, dass er abläuft, wenn das Endgerät während der Laufzeit des ersten Zeitgebers keine geeignete Zelle findet, die mit dem Endgerät verbunden werden kann; und
Übertragen einer RLF-Berichtsnachricht an eine erste Zelle, in der das Endgerät von dem Leerlaufzustand in einen verbundenen Zustand übergehen kann,
wobei die RLF-Berichtsnachricht Informationen über eine erfüllte Bedingung unter der einen oder den mehreren Bedingungen für die Kandidatenzielzelle für das CHO enthält.

2. Verfahren nach Anspruch 1, wobei die RLF-Berichtsnachricht ferner eine Zellkennung einer Primärzelle enthält, in der der RLF erkannt wird, und
wobei der erste Zeitgeber T311 ist.

3. Verfahren nach Anspruch 1, das ferner Folgendes umfasst:
falls das Endgerät vor dem Ablaufen des ersten Zeitgebers eine zweite Zelle findet, die die Zellenauswahlkriterien erfüllt, Versuchen einer Wiederherstellung der Funkverbindung zu der zweiten Zelle und Starten eines zweiten Zeitgebers; und
Eintreten in den Leerlaufzustand, falls die Wiederherstellung der Funkverbindung zu der zweiten Zelle nicht vor dem Ablaufen des zweiten Zeitgebers abgeschlossen wird,
wobei der zweite Zeitgeber T301 ist.

4. Verfahren nach Anspruch 1, wobei die RLF-Berichtsnachricht ferner Kennungs(ID)-Listeninformationen von mindestens einer Kandidatenzielzelle für das CHO enthält.

5. Verfahren, das von einer Basisstation in einem mobilen Kommunikationssystem ausgeführt wird, wobei das Verfahren Folgendes umfasst:
Übertragen von Konfigurationsinformationen für ein bedingtes Handover, CHO, einschließlich Informationen über eine oder mehrere Bedingungen für eine Kandidatenzielzelle für das CHO;
Ausführen eines Funkverbindungsaufbaus mit einem Endgerät; und
Empfangen einer Funkverbindungsfehler(RLF)-Berichtsnachricht von dem Endgerät,
wobei die RLF-Berichtsnachricht Informationen über eine erfüllte Bedingung unter einer oder mehreren Bedingungen enthält, die für eine Kandidatenzielzelle für das CHO konfiguriert sind.

6. Verfahren nach Anspruch 5, wobei die RLF-Berichtsnachricht ferner eine Zellkennung einer Primärzelle enthält, in der der RLF erkannt wird.

7. Verfahren nach Anspruch 5, wobei die RLF-Berichtsnachricht ferner Kennungs(ID)-Listeninformationen von mindestens einer Kandidatenzielzelle für das CHO enthält.

8. Endgerät in einem mobilen Kommunikationssystem, wobei das Endgerät Folgendes umfasst:
einen Transceiver; und
eine Steuerung, die zu Folgendem konfiguriert ist:
Steuern des Transceivers, um Konfigurationsinformationen für ein bedingtes Handover, CHO, einschließlich Informationen über eine oder mehrere Bedingungen für eine Kandidatenzielzelle für das CHO zu empfangen,
Erkennen eines Funkverbindungsfehlers, RLF, während das CHO ausgeführt wird, basierend auf den Konfigurationsinformationen, und Starten eines ersten Zeitgebers,
Eintreten in einen Leerlaufzustand, falls der erste Zeitgeber abläuft, wobei der erste Zeitgeber so konfiguriert ist, dass er abläuft, wenn das Endgerät während der Laufzeit des ersten Zeitgebers keine geeignete Zelle findet, die mit dem Endgerät verbunden werden kann, und
Steuern des Transceivers, um eine RLF-Berichtsnachricht an eine erste Zelle zu übertragen, in der das Endgerät von dem Leerlaufzustand in einen verbundenen Zustand übergehen kann,
wobei die RLF-Berichtsnachricht Informationen über eine erfüllte Bedingung unter der einen oder den mehreren Bedingungen für die Kandidatenzielzelle für das CHO enthält.

9. Endgerät nach Anspruch 8, wobei die RLF-Berichtsnachricht ferner eine Zellkennung einer Primärzelle enthält, in der der RLF erkannt wird, und
wobei der erste Zeitgeber T311 ist.

10. Endgerät nach Anspruch 8, wobei die Steuerung so konfiguriert ist, dass sie versucht, falls das Endgerät vor dem Ablaufen des Zeitgebers eine zweite Zelle findet, die die Zellenauswahlkriterien erfüllt, eine Funkverbindung zu der zweiten Zelle wiederherzustellen und einen zweiten Zeitgeber zu starten.

11. Endgerät nach Anspruch 10, wobei die Steuerung so konfiguriert ist, dass sie in den Leerlaufzustand eintritt, falls die Wiederherstellung der Funkverbindung zu der zweiten Zelle nicht vor dem Ablaufen des zweiten Zeitgebers abgeschlossen wird, und
wobei der zweite Zeitgeber T301 ist.

12. Endgerät nach Anspruch 8, wobei die RLF-Berichtsnachricht ferner Kennungs(ID)-Listeninformationen von mindestens einer Kandidatenzielzelle für das CHO enthält.

13. Basisstation in einem mobilen Kommunikationssystem, wobei die Basisstation Folgendes umfasst:
einen Transceiver; und
eine Steuerung, die zu Folgendem konfiguriert ist:
Übertragen von Konfigurationsinformationen für ein bedingtes Handover, CHO, einschließlich Informationen über eine oder mehrere Bedingungen für eine Kandidatenzielzelle für das CHO;
Ausführen eines Funkverbindungsaufbaus mit einem Endgerät, und
Steuern des Transceivers, um eine Funkverbindungsfehler(RLF)-Berichtsnachricht von dem Endgerät zu empfangen,
wobei die RLF-Berichtsnachricht Informationen über eine erfüllte Bedingung unter einer oder mehreren Bedingungen enthält, die für eine Kandidatenzielzelle für das CHO konfiguriert sind.

14. Basisstation nach Anspruch 13, wobei die RLF-Berichtsnachricht ferner eine Zellkennung einer Primärzelle enthält, in der der RLF erkannt wird.

15. Basisstation nach Anspruch 13, wobei die RLF-Berichtsnachricht ferner Kennungs(ID)-Listeninformationen von mindestens einer Kandidatenzielzelle für das CHO enthält.

## Revendications

1. Procédé exécuté par un terminal dans un système de communication mobile, le procédé comprenant :
recevoir des informations de configuration pour un transfert conditionnel, CHO, incluant des informations sur une ou plusieurs conditions pour une cellule cible candidate pour le CHO ;
détecter une défaillance de liaison radio, RLF, tout en exécutant le CHO sur la base des informations de configuration, et démarrer un premier temporisateur ;
entrer dans un état de veille dans le cas où le premier temporisateur expire, le premier temporisateur étant configuré pour expirer si le terminal ne trouve aucune cellule appropriée connectable avec le terminal pendant le fonctionnement du premier temporisateur ; et
transmettre, à une première cellule dans laquelle le terminal est capable de faire la transition de l'état de veille à un état connecté, un message de rapport RLF,
où le message de rapport RLF inclut des informations sur une condition remplie parmi l'une ou plusieurs conditions pour la cellule cible candidate pour le CHO.

2. Procédé selon la revendication 1, où le message de rapport RLF inclut en outre un identificateur de cellule d'une cellule primaire dans laquelle la RLF est détectée, et
où le premier temporisateur est T311.

3. Procédé selon la revendication 1, comprenant en outre :
dans le cas où le terminal trouve une deuxième cellule qui satisfait les critères de sélection de cellule avant que le premier temporisateur expire, tenter un rétablissement de connexion radio à la deuxième cellule et démarrer un deuxième temporisateur ; et
entrer dans l'état de veille, dans le cas où le rétablissement de connexion radio à la deuxième cellule n'est pas complété avant que le deuxième temporisateur expire,
où le deuxième temporisateur est T301.

4. Procédé selon la revendication 1, où le message de rapport RLF inclut en outre des informations de liste d'identificateur, ID, d'au moins une cellule cible candidate pour le CHO.

5. Procédé exécuté par une station de base dans un système de communication mobile, le procédé comprenant :
transmettre des informations de configuration pour un transfert conditionnel, CHO, incluant des informations sur une ou plusieurs conditions pour une cellule cible candidate pour le CHO ;
exécuter un établissement de connexion radio avec un terminal ; et
recevoir un message de rapport de défaillance de liaison radio, RLF, du terminal,
où le message de rapport RLF inclut des informations sur une condition remplie parmi une ou plusieurs conditions configurées pour une cellule cible candidate pour le CHO.

6. Procédé selon la revendication 5, où le message de rapport RLF inclut en outre un identificateur de cellule d'une cellule primaire dans laquelle la RLF est détectée.

7. Procédé selon la revendication 5, où le message de rapport RLF inclut en outre des informations de liste d'identificateur, ID, d'au moins une cellule cible candidate pour le CHO.

8. Terminal dans un système de communication mobile, le terminal comprenant :
un émetteur-récepteur ; et
un contrôleur configuré pour :
commander à l'émetteur-récepteur de recevoir des informations de configuration pour un transfert conditionnel, CHO, incluant des informations sur une ou plusieurs conditions pour une cellule cible candidate pour le CHO,
détecter une défaillance de liaison radio, RLF, tout en exécutant le CHO sur la base des informations de configuration, et démarrer un premier temporisateur,
entrer dans un état de veille dans le cas où le premier temporisateur expire, le premier temporisateur étant configuré pour expirer si le terminal ne trouve aucune cellule appropriée connectable avec le terminal pendant le fonctionnement du premier temporisateur, et
commander à l'émetteur-récepteur de transmettre, à une première cellule dans laquelle le terminal est capable de faire la transition de l'état de veille à un état connecté, un message de rapport RLF,
où le message de rapport RLF inclut des informations sur une condition remplie parmi l'une ou plusieurs conditions pour la cellule cible candidate pour le CHO.

9. Terminal selon la revendication 8, où le message de rapport RLF inclut en outre un identificateur de cellule d'une cellule primaire dans laquelle la RLF est détectée, et
où le premier temporisateur est T311.

10. Terminal selon la revendication 8, où le contrôleur est configuré pour, dans le cas où le terminal trouve une deuxième cellule qui satisfait les critères de sélection de cellule avant que le premier temporisateur expire, tenter un rétablissement de connexion radio à la deuxième cellule et démarrer un deuxième temporisateur.

11. Terminal selon la revendication 10, où, le contrôleur est configuré pour entrer dans l'état de veille, dans le cas où le rétablissement de connexion radio à la deuxième cellule n'est pas complété avant que le deuxième temporisateur expire, et
où le deuxième temporisateur est T301.

12. Terminal selon la revendication 8, où le message de rapport RLF inclut en outre des informations de liste d'identificateur, ID, d'au moins une cellule cible candidate pour le CHO.

13. Station de base dans un système de communication mobile, la station de base comprenant :
un émetteur-récepteur ; et
un contrôleur configuré pour :
transmettre des informations de configuration pour un transfert conditionnel, CHO, incluant des informations sur une ou plusieurs conditions pour une cellule cible candidate pour le CHO ;
exécuter un établissement de connexion radio avec un terminal, et
commander à l'émetteur-récepteur de recevoir un message de rapport de défaillance de liaison radio, RLF, du terminal,
où le message de rapport RLF inclut des informations sur une condition remplie parmi une ou plusieurs conditions configurées pour une cellule cible candidate pour le CHO.

14. Station de base selon la revendication 13, où le message de rapport RLF inclut en outre un identificateur de cellule d'une cellule primaire dans laquelle la RLF est détectée.

15. Station de base selon la revendication 13, où le message de rapport RLF inclut en outre des informations de liste d'identificateur, ID, d'au moins une cellule cible candidate pour le CHO.
